(19)

Europäisches
Patentamt
European
Patent Office
Office européen
des brevets

(11) **EP 3 244 229 A1**

(12) **EUROPEAN PATENT APPLICATION**

(43) Date of publication:
**15.11.2017 Bulletin 2017/46**

(21) Application number: **16446501.5**

(22) Date of filing: **13.05.2016**

(51) Int Cl.:
*G01S 7/03* (2006.01)          *G01S 7/35* (2006.01)
*G01S 13/34* (2006.01)         *G01S 13/58* (2006.01)
*G01S 13/93* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Autoliv Development AB
447 83 Vårgårda (SE)**

(72) Inventors:
• **MOSS, Jonathan
  85778 Haimhausen (DE)**
• **LEFEVRE, Andreas
  97717 Euerdorf (DE)**

(74) Representative: **Sandstedt, Jonas Sven James
WESTPATENT AB
Almekärrsvägen 11
443 39 Lerum (SE)**

(54) **A VEHICLE RADAR SYSTEM ARRANGED FOR INTERFERENCE REDUCTION**

(57)     The present disclosure relates to a vehicle radar system (3) comprising at least one transceiver arrangement (7) arranged to generate and transmit radar signals (4), and to receive reflected radar signals (5). The transceiver arrangement (7) comprises an ADC, Analogue to Digital Converter, arrangement (10) that is arranged to output a digital IF, Intermediate Frequency, signal (20) in a time domain to a DSP, Digital Signal Processor, arrangement (12). A first DSP function (12a, 12a') is arranged to:
- Retain sample points of the digital IF signal (20) in a spectral domain with signal components (F(0), F(1), F(2)) that comprise a defined group of frequency components falling below a certain frequency threshold.
- Reconstruct a possible time-domain fascia interference signal (51) comprised in the digital IF signal (20) from said signal components (F(0), F(1), F(2)).
- If applicable, subtract said time-domain fascia interference signal (51) from an input digital IF signal (20, 20').

FIG. 7

EP 3 244 229 A1

**Description**

DESCRIPTION OF THE DISCLOSURE

The present disclosure relates to a vehicle radar system comprising at least one transceiver arrangement arranged to generate and transmit radar signals, and to receive reflected radar signals.

Many vehicle radar systems comprise radar transceivers that are arranged for generating radar signals that are transmitted, reflected and received by means of appropriate antennas comprised in the radar system. The radar signals may for example be in the form of FMCW (Frequency Modulated Continuous Wave) signals where frequency chirps signals are formed in a well-known manner.

A radar transceiver is often mounted close to a bumper or a fascia, perhaps a couple of centimeters away from the bumper. Radar transceivers are designed to detect targets that are multiples of a range resolution, for example 0.2-0.5 meters. A closely positioned target such as a bumper or a fascia will appear in the received signal as an interference signal in the form of a fraction of a sinusoid which can appear as a slope or DC (Direct Current) offset. If the bumper vibrates, the phase of the interference signal changes. For example, in one cycle, there may be a positive slope, and a following cycle there may be a slope with negative gradient. This means that the interference signal is not the same from cycle to cycle, and therefore the interference signal cannot easily be subtracted.

When the signal is windowed and FFT'd (Fast Fourier Transformed) in order to detect the targets at different ranges, corresponding to the different frequency components, the interference signal component appears as multiple low frequency harmonics or sidelobes which extend into the first few range gates.

These sidelobes can hide real targets which are close to the radar, and can appear as false targets.

Furthermore, in a multi-radar environment, other radars can create interference with each other when the frequency chirps cross, or come close to each other. This exhibits itself as a burst of interference somewhere within the received signal during one or more of the chirp signals.

It is therefore desired to provide a vehicle radar system that is able to provide removal of interference in order to provide more accurate results than described previously.

The object of the present disclosure is thus to provide a vehicle radar system that is able to provide removal of interference in order to provide more accurate results than described previously.

This objects is obtained by means of a vehicle radar system comprising at least one transceiver arrangement arranged to generate and transmit radar signals, and to receive reflected radar signals, where the transmitted radar signals have been reflected by one or more objects. The transceiver arrangement comprises an ADC (Analogue to Digital Converter) arrangement that is arranged to output a digital IF (Intermediate Frequency) signal in a time domain to a DSP (Digital Signal Processor) arrangement that is adapted for radar signal processing. A first DSP function is arranged to:

- Retain sample points of the digital IF signal in a spectral domain with signal components that comprise a defined group of frequency components falling below a certain frequency threshold.
- Reconstruct a possible time-domain fascia interference signal comprised in the digital IF signal from said signal components.
- If applicable, subtract said time-domain fascia interference signal from an input digital IF signal.

This objects is also obtained by means of a method for a radar system, where the method comprises:

- Generating and transmitting radar signals.
- Receiving reflected radar signals, where the transmitted radar signals have been reflected by one or more objects.
- Outputting a digital IF (Intermediate Frequency) signal in a time domain.
- Retaining sample points of the digital IF signal in a spectral domain with signal components that comprise a defined group of frequency components falling below a certain frequency threshold.
- Reconstructing a possible time-domain fascia interference signal comprised in the digital IF signal from said signal components.
- If applicable, subtracting said time-domain fascia interference signal from an input digital IF signal.

According to an example, the first DSP function comprises a first branch and a second branch, where the first branch comprises an FFT (Fast Fourier Transform) module, a reconstruction module and a subtraction module.

- The FFT module is arranged to transform the digital IF signal from the time domain to the spectral domain.
- The reconstruction module is arranged to reconstruct a time-domain fascia interference signal by means of said signal components.

- The subtraction module is arranged to subtract said time-domain fascia interference signal from the input digital IF signal.

According to another example, the first DSP function is arranged to:

- Identify possible sections of the digital IF signal in the time domain that exhibit external interference exceeding an interference threshold.
- Determine whether or not to replace such sections with equivalent sections of the approximation signal.
- If applicable, replace such sections with equivalent sections of the approximation signal.

According to another example, the first DSP function comprises a threshold module, an inverse FFT module, an approximation module and a detection and repair module.

- The threshold module is arranged to identify and retain sample points with signal components that exceed a certain level threshold, while all other sample points are set to zero.

- The inverse FFT module is arranged to transform a spectral repair signal output from the threshold module to the time domain.

- The approximation module is arranged to output an approximation signal.

- The detection and repair module is arranged to identify possible sections of the digital IF signal in the time domain that exhibit external interference exceeding an interference threshold, to determine whether or not to replace such sections with equivalent sections of the approximation signal, and, if applicable, to replace such sections with equivalent sections of the approximation signal.

Other examples are disclosed in the dependent claims.

A number of advantages are obtained by means of the present disclosure. Mainly, a vehicle radar system is provided that is able to provide removal of interference due to the overlap of signals such that the interference level after FFT processing is at a lower level than previously. This results in a lower range reduction of the radar system. Further, the removal of interference reduces the potential for false targets being found at the target identification stage.

BRIEF DESCRIPTION OF THE DRAWINGS

The present disclosure will now be described more in detail with reference to the appended drawings, where:

Figure 1     shows a schematic top view of a vehicle;

Figure 2     shows a simplified schematic of a vehicle radar system;

Figure 3     shows an example of an FMCW chirp signal;

Figure 4     shows a simplified schematic of a first DSP function that is arranged for restoring an input digital IF signal;

Figure 5     shows a simplified schematic of a first DSP function that is arranged for restoring and repairing an input digital IF signal;

Figure 6     shows three graphs of digital IF signals; and

Figure 7     shows a flowchart for methods according to the present disclosure.

DETAILED DESCRIPTION

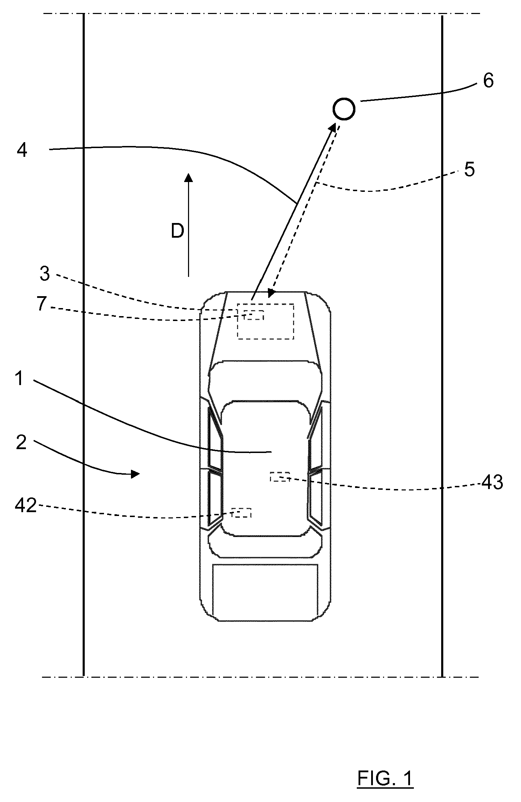

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4 and receiving reflected signals 5.

The vehicle radar system 3 thus comprises a radar transceiver arrangement 7 and is arranged to provide azimuth angle, radial velocity of possible target objects 6 by simultaneously sampling and analyzing phase and amplitude of the received signals 5. The distance to said target objects 6 is according to some aspect also acquired. The radar signals may for example be in the form of FMCW (Frequency Modulated Continuous Wave) Doppler signals operating at 77 GHz, so-called chirp signals.

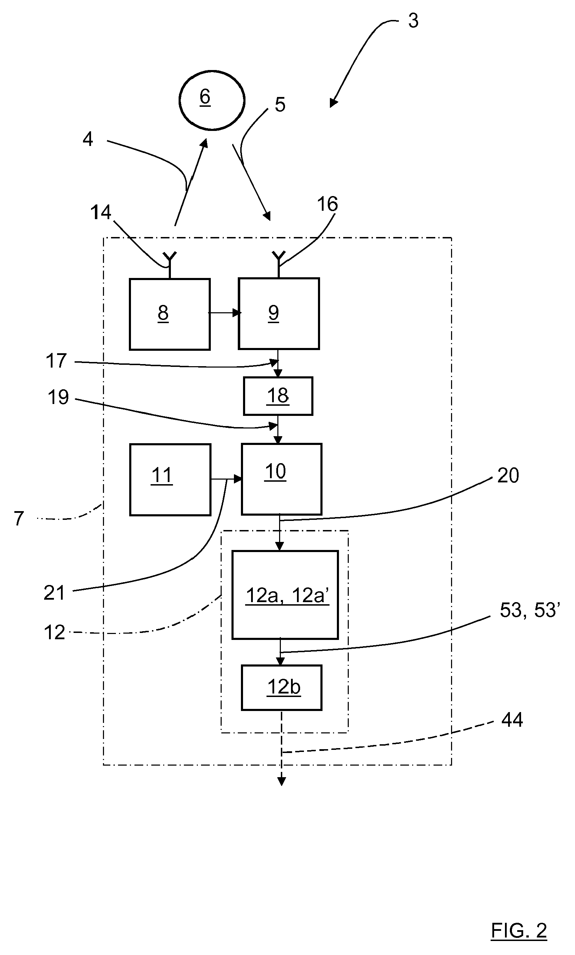

With reference also to Figure 2, the vehicle radar system 3 comprises a transceiver arrangement 7 that is arranged for generating and transmitting sweep signals in the form of FMCW chirp signals 4, and to receive reflected signals 5, where the transmitted chirp signals 4 have been reflected by an object 6.

The transceiver arrangement 7 comprises a transmitter 8 with a transmit antenna arrangement 14, a receiver 9 with a receiver antenna arrangement 16, an Analog to Digital Converter (ADC) arrangement 10 and sampling and timing arrangement 11.

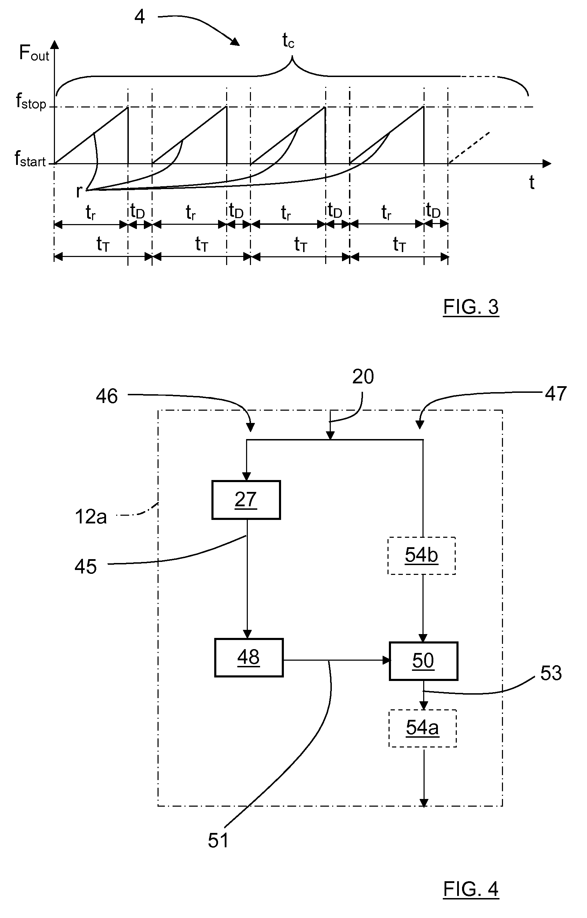

As shown in Figure 3, a transmitted chirp signal 4 is in the form of a continuous sinusoid where the output frequency $F_{out}$ varies from a first frequency $f_{start}$ to a second frequency $f_{stop}$ over the course of a ramp r, where each chirp signal 4 comprises either a single, or a plurality of frequency ramps r in one cycle or several repeating cycles. In this example the magnitude of the first frequency $f_{start}$ falls below the magnitude of the second frequency $f_{stop}$.

A cycle for a chirp signal 4 lasts for a certain cycle time $t_c$, each ramp r lasts a certain ramp time $t_r$, having a ramp period time $t_T$. Between two consecutive ramps of the chirp signal 4 there is a delay time $t_D$.

Referring back to Figure 2, the reflected signals 5 are received by the receiver 9 via the receiver antenna arrangement 16. The received signals 5, thus constituted by reflected radar echoes, are then mixed with the transmitted chirp signals 4 in the receiver 9. This may be a single channel mixer, or a two channel mixer comprising both in-phase and quadrature components. In this way, an IF (Intermediate Frequency) signal 17 is acquired, which may be real or, in the case of quadrature mixer, imaginary. The IF signal 17 is filtered in an IF filter 18 such that a filtered IF signal 19 is acquired.

The difference frequency of the filtered IF signal 19 relates to the target distance and is transferred to the corresponding ADC arrangement 10, where the filtered IF signal 19 is sampled at a certain predetermined sampling frequency $f_s$ and converted to a digital IF signal 20 comprising sample points in a previously known manner, the sampling frequency $f_s$ being provided in the form of a sampling and timing signal 21 produced by the sampling and timing arrangement 11 that is connected to the ADC arrangement 10.

The ADC arrangement 10 is connected to a DSP arrangement 12 that is adapted for radar signal processing in first DSP function 12a and a second DSP function 12b. The second DSP function 12b defines the well-known FFT (Fast Fourier Transform) processing of an FMCW radar signal to extract objects within the field of view 6.

According to the present disclosure, with reference also to Figure 4, the first DSP function 12a is arranged for removal of a bumper or fascia interference signal, hereafter referred to as fascia interference signal, that is comprised in the digital IF signal 20. For this purpose the first DSP function 12a comprises a first branch 46 and a second branch 47, where the first branch 46 comprises an FFT module 27 and a reconstruction module 48. The second branch is 47 only constituted by a direct connection for the digital IF signal 20 to a subtraction module 50, where the reconstruction module 48 also is connected to the subtraction module 50.

A basic principle behind the removal of a fascia interference signal from the digital IF signal 20 comprises using a few first samples from the FFT module 27 for reconstructing the fascia interference signal in the reconstruction module 48. A reconstructed time-domain fascia interference signal 51 is output from the reconstruction module 48 and input to the subtraction module 50. The reconstructed time-domain fascia interference signal 51 is then removed from the digital IF signal 20 in the subtraction module 50, such that a restored digital IF signal 53 is obtained.

The reconstruction is performed for each chirp and for each Rx channel individually, and may be performed in several ways; in the following, two examples will be provided. For both examples, only the few first samples from the FFT module 27 are used, since the fascia interference signal is a low frequency/DC signal.

For a first example, the fascia interference signal $x_{interference}$ is assumed to be in the form:

$$x_{interference} = A_{interference}*\cos(k*n+\varphi), \qquad (1)$$

where $A_{interference}$ is the fascia interference amplitude, n=1 ... N, where N is the number of samples per radar cycle, k is a constant dependent on an approximate distance D between a radar transceiver and bumper or fascia and $\varphi$ is the relative phase correction needed to align the reconstructed signal to the received signal. All parameters are determined from the magnitude and phase of the first few samples of the FFT either using a formula or lookup table. The constant k may either be provided to the radar as a constant parameter or may alternatively be determined by signal processing.

In this context, a radar cycle is one observation phase in which the radar acquires data, processes the data on several signal processing levels and sends out available results. This can be a fixed time interval, for example 20-80 milliseconds, or it can be a dynamic time interval depending on environment conditions and processing load.

The samples used from the FFT module 27 are the following signal components:

F(0) - this is the zero frequency component from the FFT. This defines the mean of the signal from one chirp for one channel.

F(1) - this is a complex value and corresponds to the lowest complete sinusoid contained within the signal. This may be considered as a magnitude and phase.

F(2) - this is a complex value and corresponds to the following complete sinusoid contained within the signal and may optionally be used.

Generally, the signal components used are constituted by a defined group of frequency components falling below a certain frequency threshold is used. How many and which signal components that should be used may vary, but the zero frequency component F(0) is preferably used since it comprises a relatively high degree of relevant information regarding the fascia interference signal.

In addition to the samples above, the distance D is used by the signal in the reconstruction module 48, where furthermore the reconstruction module 48 is arranged to determine the fascia interference signal amplitude $A_{interference}$, the phase angle $\varphi$ and the constant k by means of look-up tables or analytical calculation.

Having determined all parameters of the fascia interference signal $x_{interference}$, it is output to the subtraction module 50 from the reconstruction module 48.

For a second example, instead of determining said parameters of the fascia interference signal $x_{interference}$, a plurality of possible fascia interference signals are stored in the reconstruction module 48. Using the same inputs as in the first example; the first few samples F(0), F(1) and possibly F(2) from the FFT module 27 and the distance D, one vector **X** containing the fascia interference signal $x_{interference}$ (1) ... $x_{interference}$ (N) for a radar chirp is selected and output from the reconstruction module 48 in the form of a look-up table.

As shown in Figure 4, the first DSP function 12a comprises a window module 54a to which the restored digital IF signal 53 is output before being further fed to the second DSP function 12b. Alternatively, the window module 54b may be positioned such that it is comprised in the second branch 47 instead, before the subtraction module 50. These alternative positions are indicated with dashed lines. The windowing may alternatively be performed in the second DSP function 12b.

The subtraction module 50 is arranged to output the restored digital IF signal 53, possibly via a window module 54a, 54b as described above, to the second DSP function 12b that is adapted for radar signal processing, for example by means of a range FFT function to convert the restored digital IF signal 53 to a range domain, and a Doppler FFT to combine the results from successive chirp signal ramps, or other suitable Doppler radar cycles, into the Doppler domain. This results in an output 44 comprising Range-Doppler matrices that are transferred for further processing, which is not further discussed here, many examples of such further processing being well-known in the art.

The second DSP function 12b is well-known and its functionality is well-known in the art and is therefore described in less detail than the first DSP function 12a. The first DSP function 12a and the second DSP function 12b may very well be practically implemented in one and the same signal processor arrangement in the DSP arrangement 12, or, alternatively, in different signal processor arrangements in the DSP arrangement 12.

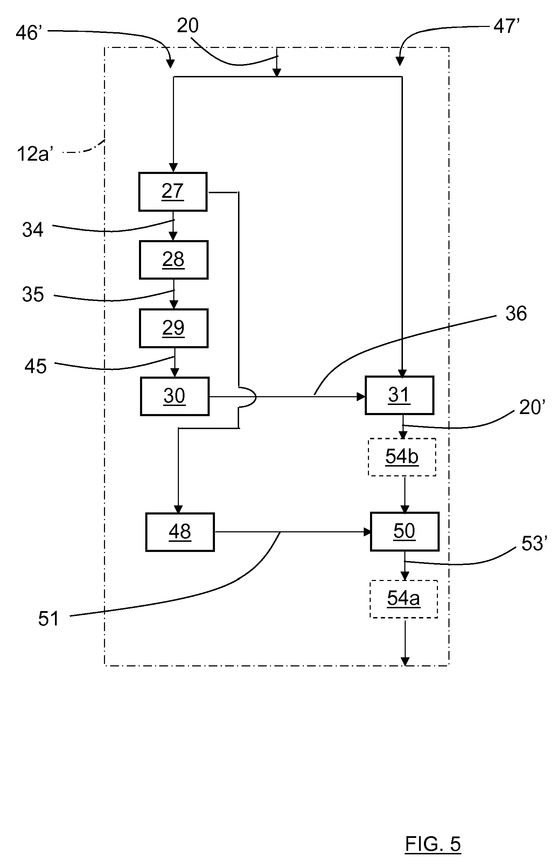

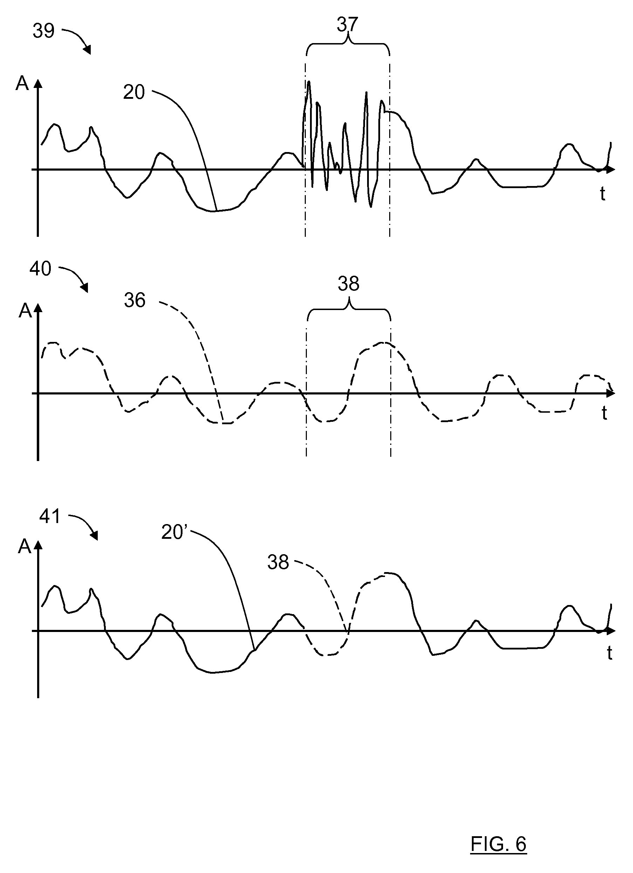

According to some aspects, the above is combined with a signal repair functionality that will be described in the following with reference to Figure 5 and Figure 6. Here, other types of interference is handled, for example due to other radars that create interference with each other when the frequency chirps cross, or come close to each other. Typically, bursts of interference occur in these cases, and will in the following be referred to as external interference.

As shown in Figure 5, there is an alternative first DSP functionality 12a' that comprises a first branch 46' and a second branch 47'. The first branch 46' comprises the FFT module 27, a threshold module 28, an inverse FFT module 29, a buffer module 30 for storing the approximation signal and a detection and repair module 31. The detection and repair module 31 is arranged to detect the samples that have incurred external interference and this may be accomplished, for example, by using a high pass filter and a further threshold detection process.

The input digital IF signal 20 is transformed to a frequency domain by the FFT module 27, and the acquired digital spectral signal 34 is processed in the threshold module 28.

The threshold module 28 is arranged to identify and retain sample points with signal components that exceed a certain level threshold, while all other sample points are set to zero. The level threshold should be sufficiently high to remove the noise components from the signal 27. This level can be determined using a well-known technique, such as a statistical CFAR analysis of signal 27. The threshold may need to be different for each Rx channel and also may need to change from chirp to chirp.

The threshold module 28 is arranged to output a spectral repair signal 35 that is fed into the inverse FFT module 29 that is arranged to transform the spectral repair signal 35 back to the time domain. A resulting output repair signal 45 is fed into the buffer module 30 that is arranged to output an approximation signal 36 that is fed into the detection and repair module 31. The buffer module 30 comprises a storage buffer and is arranged to enable a necessary block, or necessary blocks, of the signal to be replaced in the detection and repair module 31.

The input digital IF signal 20 is also fed directly into the detection and repair module 31 via the second branch 47'. The second branch must contain sufficient delay to match the processing time of the first branch 46'. The detection and repair module 31 is arranged to identify possible sections of the digital IF signal 20 that exhibit at least one period of external interference exceeding an external interference threshold, and to determine whether or not to replace such sections with equivalent sections of the approximation signal 36 that is available from the buffer module 30.

More in detail, the digital spectral signal 34 is constituted by a complex vector that represents the targets at amplitude peaks, where each amplitude peak position corresponds to the frequency (or range). Without external interference, the amplitude level of the digital spectral signal 34 between the amplitude peaks will be low, corresponding to a noise floor, which typically may be constituted by thermal noise. However, when bursts of external interference occur in the time domain, the noise floor rises up, thus hiding the weaker targets that were detectable previously. The larger targets, still having amplitude that exceeds the amplitude of the noise floor, are still detectable.

The complex vector of the digital spectral signal 34 is used to identify the largest targets, i.e. the signal components that have an amplitude level that exceeds said certain level threshold. All parts between these signal components are set to zero, mainly containing noise.

Then, after the inverse FFT, the acquired output repair signal 45 only contains information of the largest targets, and thus lacks information about the smaller targets. Therefore, the detection and repair module 31 is arranged to keep as much of the original digital IF signal 20 as possible, since it contains the signal from the smaller targets as well. But where the digital IF signal 20 is determined to contain at least one period of external interference, this section of the digital IF signal 20 is deleted and the equivalent signal section from the approximation signal 36 is inserted instead to form a repaired digital IF signal 20'. There may be an additional smoothing within the detection and repair module 31 that is arranged to remove any discontinuities in sections of the signal bordering the transition from original signal to replaced signal but this is not essential.

This means that when the processing starts at the second DSP function 12b, most targets are present in the repaired digital IF signal 20'. Only in those sections that are determined to contain at least one period of external interference, there is only information about the larger targets, so the energy/information about the smaller targets is slightly reduced, but they end up being much more present than when the noise burst is left in the original digital IF signal 20, without repair.

This is illustrated in Figure 6, where three graphs 39, 40, 41 are shown, all graphs 39, 40, 41 showing amplitude A on their y-axis and time t on their x-axis. A first graph 39 shows the original digital IF signal 20 with a period of external interference 37. A second graph 40 shows the approximation signal 36, and a third graph 41 shows the repaired digital IF signal 20' where the period of external interference 37 from the first graph has been removed and the equivalent signal section 38 from the approximation signal 36 has been inserted instead.

The repaired digital IF signal 20' thus comprises the original digital IF signal 20 without the deleted portions, and the equivalent portions of the approximation signal 36 are inserted instead of the deleted portions. Only one such deleted portion 37 is shown in the example with reference to Figure 5, but in practice each radar cycle may comprise one or more such portions that may have originated from one or more external interference sources.

The repaired digital IF signal 20' is now fed into the subtraction module 50 in order to subtract the fascia interference signal. This may be performed via a window module 54b as described above. That means that for the example described with reference to Figure 4, the digital IF signal 20 is input to the subtraction module 50, and for the example described with reference to Figure 5, the repaired digital IF signal 20' is input to the subtraction module 50. Generally, the subtraction module 50 is arranged to subtract said time-domain fascia interference signal 51 from an input digital IF signal 20, 20'.

The first few samples F(0), F(1) and possibly F(2) from the FFT module 27 are fed into the reconstruction module 48, and with knowledge of the distance D, the reconstruction module 48 is arranged to output a reconstructed time-domain fascia interference signal 51. Then the reconstructed time-domain fascia interference signal 51 is removed from the repaired digital IF signal 20' in the subtraction module 50 such that a restored repaired digital IF signal 53' is obtained. The repaired digital IF signal 53' is fed further to the second DSP function 12b, possibly via a window module 54a as described above.

As indicated in Figure 1, the vehicle 1 comprises a safety control unit 42 and safety means 43, for example an emergency braking system and/or an alarm signal device. The safety control unit 42 is arranged to control the safety means 43 in dependence of input from the radar system 3. According to an aspect, the output 44 of the second DSP function 12b constitutes input to the safety control unit 42.

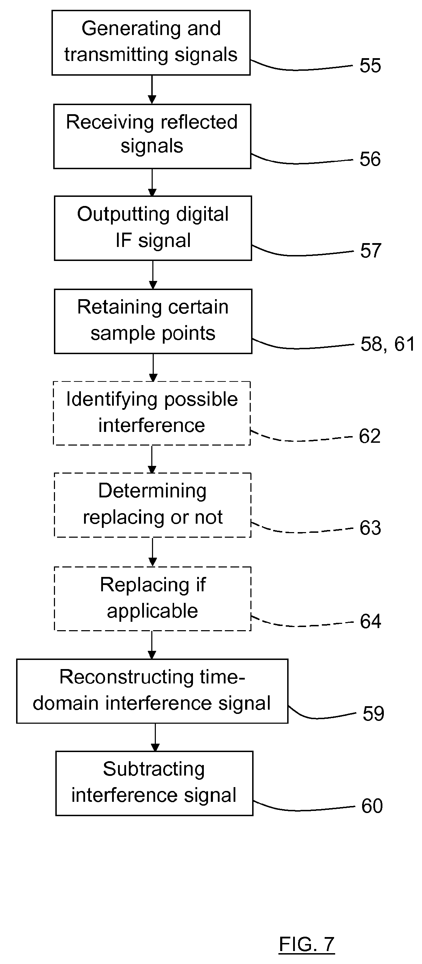

According to Figure 7, the present disclosure relates to a method comprising:

55: Generating and transmitting radar signals 4.

56: Receiving reflected radar signals 5, where the transmitted radar signals 4 have been reflected by one or more objects 6. 57: Outputting a digital IF signal 20 in a time domain.

58: Retaining sample points of an input digital IF signal 20, 20' in a spectral domain with signal components F(0), F(1), F(2) that fall below a certain order of sinusoids.

59: Reconstructing a possible time-domain fascia interference signal 51 comprised in the digital IF signal 20 from said signal components F(0), F(1), F(2).

60: If applicable, subtracting said time-domain fascia interference signal 51 from said input digital IF signal 20, 20'.

According to an example, the method also comprises:

61: Identifying and retaining sample points of the digital IF signal 20 in a spectral domain with signal components that exceed a certain level threshold such that an approximation signal 36 is formed in the time domain.

62: Identifying possible sections 37 of the digital IF signal 20 in the time domain that exhibit external interference exceeding an external interference threshold.

63: Determining whether or not to replace such sections 37 with equivalent sections 38 of the approximation signal 36.

64: If applicable, replacing such sections 37 with equivalent sections 38 of the approximation signal 36.

In the above, it should be noticed that the external interference 37 should be removed before the fascia interference, as illustrated in Figure 7. This is due to the fact that the approximation signal 36 also contains the fascia interference through the processing of FFT module 27, the threshold module 28 and the inverse FFT module 29.

It would alternatively be possible to reverse the subtraction order of the external interference and fascia interference, with the associated necessary changes to the detection and repair module 31, which would be arranged to remove the fascia signal from the approximation signal 36.

The present disclosure is not limited to the examples above, but may vary freely within the scope of the appended claims. For example, the radar system may be implemented in any type of vehicle such as cars, trucks, buses, boats and aircraft as well as fixed radars such as those monitoring traffic flow, marine environments, aircraft landing, presence of debris or presence of pedestrians.

The radar transceiver 7 is adapted for any suitable type of Doppler radar. There may be any number of radar transceivers 7 in the vehicle radar system 3, and they may be arranged for transmission and signals in any suitable direction. The plurality of sensing sectors or sensing bins may thus be directed in other desirable directions, such as rearwards or at the sides of the vehicle 1.

If the digital IF signal 20 is determined to not contain any external interference, the restored digital IF signal 53 is identical to the digital IF signal 20. In the same manner, if no replacements are considered needed, no replacements are made. The terms "restored" and "repaired" do in this context not indicate that an actual restoration and/or reparation has occurred, but that a restoration and/or reparation has been possible. Generally, the first DSP function 12a, 12a', is arranged to output a restored and/or repaired digital IF signal 53, 53' to the second DSP function 12b.

The ADC arrangement 10 and DSP arrangement 12 should be interpreted as having a corresponding ADC and DSP functionality, and may each be constituted by a plurality of separate components. Alternatively, each ADC arrangement may be comprised in one ADC chip, and each DSP arrangement may be comprised in one DSP chip, or even combined in one common chip.

According to an aspect, each antenna arrangement 14, 16 comprises one or more antennas, where each antenna may be constituted by one antenna element or by an array of antenna elements. The number of antenna arrangements, antennas within each antenna arrangement, IF signals and corresponding receiver (RX) channels may vary.

According to an aspect, this means that if a radar system 3 such as the one described above comprises a plurality of simultaneous parallel receiver (RX) channels, these enable estimation of target azimuth angle. In such cases, it is possible to analyze the signal of only one RX channel in order to identify which ADC samples that have suffered the external interference that should be replaced.

Since the other RX channels are sampled simultaneously, the same ADC block of ADC samples during a radar cycle will suffer external interference that should be replaced. This can be used to simplify the processing.

Generally, the present disclosure relates to a vehicle radar system 3 comprising at least one transceiver arrangement 7 arranged to generate and transmit radar signals 4, and to receive reflected radar signals 5, where the transmitted radar signals 4 have been reflected by one or more objects 6, where the transceiver arrangement 7 comprises an ADC (Analogue to Digital Converter) arrangement 10 that is arranged to output a digital IF (Intermediate Frequency) signal 20 in a time domain to a DSP (Digital Signal Processor) arrangement 12 that is adapted for radar signal processing. A first DSP function 12a, 12a' is arranged to:

- retain sample points of the digital IF signal 20 in a spectral domain with signal components F(0), F(1), F(2) that comprise a defined group of frequency components falling below a certain frequency threshold,
- reconstruct a possible time-domain fascia interference signal 51 comprised in the digital IF signal 20 from said signal components F(0), F(1), F(2), and
- if applicable, subtract said time-domain fascia interference signal 51 from an input digital IF signal 20, 20'.

According to an example, the first DSP function 12a comprises a first branch 46, 46' and a second branch 47, 47', where the first branch comprises an FFT (Fast Fourier Transform) module 27, a reconstruction module 48 and a subtraction module 50, where:

-    the FFT module 27 is arranged to transform the digital IF signal 20 from the time domain to the spectral domain,
-    the reconstruction module 48 is arranged to reconstruct a time-domain fascia interference signal 51 by means of said signal components F(0), F(1), F(2), and where
-    the subtraction module 50 is arranged to subtract said time-domain fascia interference signal 51 from the input digital IF signal 20, 20'.

According to an example, the first DSP function 12a' is arranged to:

-    identify possible sections 37 of the digital IF signal 20 in the time domain that exhibit external interference exceeding an interference threshold,
-    determine whether or not to replace such sections 37 with equivalent sections 38 of the approximation signal 36, and
-    if applicable, replace such sections 37 with equivalent sections 38 of the approximation signal 36.

According to an example, the first DSP function 12a' comprises a threshold module 28, an inverse FFT module 29, an approximation module 30 and a detection and repair module 31, where:

-    the threshold module 28 is arranged to identify and retain sample points with signal components that exceed a certain level threshold, while all other sample points are set to zero,
-    the inverse FFT module 29 is arranged to transform a spectral repair signal 35 output from the threshold module 28 to the time domain,
-    the approximation module 30 is arranged to output an approximation signal 36, and
-    the detection and repair module 31 is arranged to identify possible sections 37 of the digital IF signal 20 in the time domain that exhibit external interference exceeding an interference threshold, to determine whether or not to replace such sections 37 with equivalent sections 38 of the approximation signal 36, and, if applicable, to replace such sections 37 with equivalent sections 38 of the approximation signal 36.

According to an example, the first DSP function 12a, 12a' is arranged to output a restored and/or repaired digital IF signal 53, 53' to a second DSP function 12b that is adapted for radar signal processing by means of a range FFT to convert the restored and/or repaired digital IF signal 53, 53' to a range domain, and a Doppler FFT to combine the results from successive Doppler radar cycles into the Doppler domain.

According to an example, the first DSP function 12a, 12a' is arranged to reconstruct said time-domain fascia interference signal 51 in the form of:

$$x_{interference} = A_{interference} * \cos(k*n+\varphi),$$

where $A_{interference}$ is the fascia interference amplitude, n=1 ... N, where N is the number of samples per radar cycle, k is a constant dependent on an approximate distance D between a radar transceiver and bumper or fascia, and $\varphi$ is a relative phase correction needed to align the reconstructed signal to the received signal, where the first DSP function 12a, 12a' is arranged to determine all parameters needed from the magnitude and phase of said signal components F(0), F(1), F(2) by means of a formula or a lookup table, where the constant k either is provided to the radar system 3 as a constant parameter or alternatively is determined by means of signal processing.

According to an example, the first DSP function 12a, 12a' is arranged to reconstruct said time-domain fascia interference signal 51 by selecting from a vector **X** stored in the reconstruction module 48, said vector **X** containing a plurality of possible fascia interference signals $x_{interference}$ (1) ... $x_{interference}$ (N), n=1 ... N, where N is the number of samples per radar cycle.

Generally, the present disclosure also relates to a method for a radar system 3, where the method comprises:

55: generating and transmitting radar signals 4;
56: receiving reflected radar signals 5, where the transmitted radar signals 4 have been reflected by one or more objects 6; 57: outputting a digital IF (Intermediate Frequency) signal 20 in a time domain;
58: retaining sample points of the digital IF signal 20 in a spectral domain with signal components F(0), F(1), F(2) that comprise a defined group of frequency components falling below a certain frequency threshold;

59: reconstructing a possible time-domain fascia interference signal 51 comprised in the digital IF signal 20 from said signal components F(0), F(1), F(2); and, if applicable,
60: subtracting said time-domain fascia interference signal 51 from an input digital IF signal 20, 20'.

According to an example, the method further comprises:

61: identifying and retaining sample points of the digital IF signal 20 in a spectral domain with signal components that exceed a certain level threshold, such that an approximation signal 36 is formed in the time domain;
62: identifying possible sections 37 of the digital IF signal 20 in the time domain that exhibit external interference exceeding an external interference threshold,
63: determining whether or not to replace such sections 37 with equivalent sections 38 of the approximation signal 36, and
64: if applicable, replacing such sections 37 with equivalent sections 38 of the approximation signal 36.

According to an example, the method comprises setting all other sample points to zero when forming the approximation signal 36.

According to an example, the method further comprises outputting a restored and/or repaired digital IF signal 53, 53' for radar signal processing by converting the restored and/or repaired digital IF signal 53, 53' to a range domain, and combining the results from successive Doppler radar cycles into the Doppler domain.

According to an example, the method further comprises reconstructing said time-domain fascia interference signal 51 in the form of:

$$x_{interference} = A_{interference} * \cos(k*n+\varphi),$$

where $A_{interference}$ is the fascia interference amplitude, n=1 ... N, where N is the number of samples per radar cycle, k is a constant dependent on an approximate distance D between a radar transceiver and bumper or fascia, and $\varphi$ is a relative phase correction needed to align the reconstructed signal to the received signal, where the method comprises determining all parameters needed from the magnitude and phase of said signal components F(0), F(1), F(2) by either using a formula or a lookup table, where the constant k either is provided to the radar system 3 as a constant parameter or alternatively is determined by using signal processing.

According to an example, the method further comprises reconstructing said time-domain fascia interference signal 51 by selecting from a vector **X** containing a plurality of possible fascia interference signals $x_{interference}(1)$ ... $x_{interference}(N)$, n=1 ... N, where N is the number of samples per radar cycle.

**Claims**

1. A vehicle radar system (3) comprising at least one transceiver arrangement (7) arranged to generate and transmit radar signals (4), and to receive reflected radar signals (5), where the transmitted radar signals (4) have been reflected by one or more objects (6), where the transceiver arrangement (7) comprises an ADC, Analogue to Digital Converter, arrangement (10) that is arranged to output a digital IF, Intermediate Frequency, signal (20) in a time domain to a DSP, Digital Signal Processor, arrangement (12) that is adapted for radar signal processing, **characterized in that** a first DSP function (12a, 12a') is arranged to:

   - retain sample points of the digital IF signal (20) in a spectral domain with signal components (F(0), F(1), F(2)) that comprise a defined group of frequency components falling below a certain frequency threshold,
   - reconstruct a possible time-domain fascia interference signal (51) comprised in the digital IF signal (20) from said signal components (F(0), F(1), F(2)), and
   - if applicable, subtract said time-domain fascia interference signal (51) from an input digital IF signal (20, 20').

2. The vehicle radar system (3) according to claim 1, **characterized in that** the first DSP function (12a) comprises a first branch (46, 46') and a second branch (47, 47'), where the first branch comprises an FFT, Fast Fourier Transform, module (27), a reconstruction module (48) and a subtraction module (50), where:

   - the FFT module (27) is arranged to transform the digital IF signal (20) from the time domain to the spectral domain,

- the reconstruction module (48) is arranged to reconstruct a time-domain fascia interference signal (51) by means of said signal components (F(0), F(1), F(2)),and where
- the subtraction module (50) is arranged to subtract said time-domain fascia interference signal (51) from the input digital IF signal (20, 20').

3. The vehicle radar system (3) according to any one of the claims 1 or 2, **characterized in that** the first DSP function (12a') is arranged to:

- identify possible sections (37) of the digital IF signal (20) in the time domain that exhibit external interference exceeding an interference threshold,
- determine whether or not to replace such sections (37) with equivalent sections (38) of the approximation signal (36), and
- if applicable, replace such sections (37) with equivalent sections (38) of the approximation signal (36).

4. The vehicle radar system (3) according to claim 3, **characterized in that** the first DSP function (12a') comprises a threshold module (28), an inverse FFT module (29), an approximation module (30) and a detection and repair module (31), where:

- the threshold module (28) is arranged to identify and retain sample points with signal components that exceed a certain level threshold, while all other sample points are set to zero,
- the inverse FFT module (29) is arranged to transform a spectral repair signal (35) output from the threshold module (28) to the time domain,
- the approximation module (30) is arranged to output an approximation signal (36), and
- the detection and repair module (31) is arranged to identify possible sections (37) of the digital IF signal (20) in the time domain that exhibit external interference exceeding an interference threshold, to determine whether or not to replace such sections (37) with equivalent sections (38) of the approximation signal (36), and, if applicable, to replace such sections (37) with equivalent sections (38) of the approximation signal (36).

5. The vehicle radar system (3) according to any one of the previous claims, **characterized in that** the first DSP function (12a, 12a') is arranged to output a restored and/or repaired digital IF signal (53, 53') to a second DSP function (12b) that is adapted for radar signal processing by means of a range FFT to convert the restored and/or repaired digital IF signal (53, 53') to a range domain, and a Doppler FFT to combine the results from successive Doppler radar cycles into the Doppler domain.

6. The vehicle radar system (3) according to any one of the previous claims, **characterized in that** the first DSP function (12a, 12a') is arranged to reconstruct said time-domain fascia interference signal (51) in the form of:

$$x_{interference} = A_{interference}*\cos(k*n+\varphi),$$

where $A_{interference}$ is the fascia interference amplitude, n=1 ... N, where N is the number of samples per radar cycle, k is a constant dependent on an approximate distance D between a radar transceiver and bumper or fascia, and $\varphi$ is a relative phase correction needed to align the reconstructed signal to the received signal, where the first DSP function (12a, 12a') is arranged to determine all parameters needed from the magnitude and phase of said signal components (F(0), F(1), F(2)) by means of a formula or a lookup table, where the constant k either is provided to the radar system (3) as a constant parameter or alternatively is determined by means of signal processing.

7. The vehicle radar system (3) according to any one of the claims 1-5, **characterized in that** the first DSP function (12a, 12a') is arranged to reconstruct said time-domain fascia interference signal (51) by selecting from a vector (**X**) stored in the reconstruction module (48), said vector (**X**) containing a plurality of possible fascia interference signals $x_{interference}$ (1) ... $x_{interference}$ (N), n=1 ... N, where N is the number of samples per radar cycle.

8. A method for a radar system (3), where the method comprises:

(55) generating and transmitting radar signals (4);
(56) receiving reflected radar signals (5), where the transmitted radar signals (4) have been reflected by one or more objects (6); and

(57) outputting a digital IF, Intermediate Frequency, signal (20) in a time domain;

**characterized in that** the method further comprises:

(58) retaining sample points of the digital IF signal (20) in a spectral domain with signal components (F(0), F(1), F(2)) that comprise a defined group of frequency components falling below a certain frequency threshold;
(59) reconstructing a possible time-domain fascia interference signal (51) comprised in the digital IF signal (20) from said signal components (F(0), F(1), F(2)); and, if applicable,
(60) subtracting said time-domain fascia interference signal (51) from an input digital IF signal (20, 20').

9. The method according to claim 8, **characterized in that** the method further comprises:

(61) identifying and retaining sample points of the digital IF signal (20) in a spectral domain with signal components that exceed a certain level threshold, such that an approximation signal (36) is formed in the time domain;
(62) identifying possible sections (37) of the digital IF signal (20) in the time domain that exhibit external interference exceeding an external interference threshold,
(63) determining whether or not to replace such sections (37) with equivalent sections (38) of the approximation signal (36), and
(64) if applicable, replacing such sections (37) with equivalent sections (38) of the approximation signal (36).

10. The method according to claim 8, **characterized in that** the method comprises setting all other sample points to zero when forming the approximation signal (36).

11. The method according to any one of the claims 8-10, **characterized in that** the method further comprises outputting a restored and/or repaired digital IF signal (53, 53') for radar signal processing by converting the restored and/or repaired digital IF signal (53, 53') to a range domain, and combining the results from successive Doppler radar cycles into the Doppler domain.

12. The method according to any one of the claims 9-11, **characterized in that** the method further comprises reconstructing said time-domain fascia interference signal (51) in the form of:

$$x_{interference} = A_{interference} * cos(k*n+\varphi),$$

where $A_{interference}$ is the fascia interference amplitude, n=1 ... N, where N is the number of samples per radar cycle, k is a constant dependent on an approximate distance D between a radar transceiver and bumper or fascia, and $\varphi$ is a relative phase correction needed to align the reconstructed signal to the received signal, where the method comprises determining all parameters needed from the magnitude and phase of said signal components (F(0), F(1), F(2)) by either using a formula or a lookup table, where the constant k either is provided to the radar system (3) as a constant parameter or alternatively is determined by using signal processing.

13. The method according to any one of the claims 9-11, **characterized in that** the method further comprises reconstructing said time-domain fascia interference signal (51) by selecting from a vector (**X**) containing a plurality of possible fascia interference signals $x_{interference}$ (1) ... $x_{interference}$ (N), n=1 ... N, where N is the number of samples per radar cycle.

FIG. 1

FIG. 2

FIG. 3

FIG. 4

EP 3 244 229 A1

FIG. 5

15

FIG. 6

```
┌─────────────────────────┐
│      Generating and      │
│   transmitting signals   │────── 55
└─────────────────────────┘
            │
            ▼
┌─────────────────────────┐
│     Receiving reflected  │
│         signals          │────── 56
└─────────────────────────┘
            │
            ▼
┌─────────────────────────┐
│     Outputting digital   │
│        IF signal         │────── 57
└─────────────────────────┘
            │
            ▼
┌─────────────────────────┐
│     Retaining certain    │
│      sample points       │────── 58, 61
└─────────────────────────┘
            │
            ▼
┌ ─ ─ ─ ─ ─ ─ ─ ─ ─ ─ ─ ─ ┐
   Identifying possible
        interference       ┆ ─ ─ ─ ─ 62
└ ─ ─ ─ ─ ─ ─ ─ ─ ─ ─ ─ ─ ┘
            │
            ▼
┌ ─ ─ ─ ─ ─ ─ ─ ─ ─ ─ ─ ─ ┐
       Determining
      replacing or not     ┆ ─ ─ ─ ─ 63
└ ─ ─ ─ ─ ─ ─ ─ ─ ─ ─ ─ ─ ┘
            │
            ▼
┌ ─ ─ ─ ─ ─ ─ ─ ─ ─ ─ ─ ─ ┐
        Replacing if
         applicable        ┆ ─ ─ ─ ─ 64
└ ─ ─ ─ ─ ─ ─ ─ ─ ─ ─ ─ ─ ┘
            │
            ▼
┌─────────────────────────┐
│   Reconstructing time-   │
│ domain interference signal│────── 59
└─────────────────────────┘
            │
            ▼
┌─────────────────────────┐
│       Subtracting        │
│    interference signal   │────── 60
└─────────────────────────┘
```

FIG. 7

Europäisches
Patentamt

European
Patent Office

Office européen
des brevets

# EUROPEAN SEARCH REPORT

**Application Number**

EP 16 44 6501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/19744 A1 (AUTOMOTIVE SYSTEMS LAB [US]) 22 April 1999 (1999-04-22) * the whole document * | 1-13 | INV. G01S7/03 G01S7/35 G01S13/34 G01S13/58 G01S13/93 |
| A | EP 0 654 679 A1 (HUGHES AIRCRAFT CO [US]) 24 May 1995 (1995-05-24) * the whole document * | 1-13 | |
| A | WO 02/14900 A2 (RAYTHEON CO [US]) 21 February 2002 (2002-02-21) * the whole document * | 1-13 | |

**TECHNICAL FIELDS SEARCHED (IPC)**

G01S

The present search report has been drawn up for all claims

| Place of search | Date of completion of the search | Examiner |
|---|---|---|
| Munich | 20 October 2016 | Schmelz, Christian |

EPO FORM 1503 03.82 (P04C01)

## ANNEX TO THE EUROPEAN SEARCH REPORT
## ON EUROPEAN PATENT APPLICATION NO.
EP 16 44 6501

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2016

| Patent document cited in search report | | Publication date | Patent family member(s) | | Publication date |
|---|---|---|---|---|---|
| WO 9919744 | A1 | 22-04-1999 | CA | 2271154 A1 | 22-04-1999 |
| | | | DE | 69834710 T2 | 10-05-2007 |
| | | | EP | 0953155 A1 | 03-11-1999 |
| | | | WO | 9919744 A1 | 22-04-1999 |
| EP 0654679 | A1 | 24-05-1995 | AU | 668489 B2 | 02-05-1996 |
| | | | AU | 7779094 A | 27-07-1995 |
| | | | CA | 2136035 A1 | 19-05-1995 |
| | | | EP | 0654679 A1 | 24-05-1995 |
| | | | JP | H07234275 A | 05-09-1995 |
| | | | US | 6664920 B1 | 16-12-2003 |
| WO 0214900 | A2 | 21-02-2002 | AU | 8495301 A | 25-02-2002 |
| | | | AU | 8498401 A | 25-02-2002 |
| | | | AU | 8651301 A | 25-02-2002 |
| | | | AU | 8826801 A | 25-02-2002 |
| | | | AU | 8827301 A | 25-02-2002 |
| | | | AU | 9053301 A | 25-02-2002 |
| | | | DE | 60107692 D1 | 13-01-2005 |
| | | | DE | 60107692 T2 | 15-12-2005 |
| | | | DE | 60119335 T2 | 12-04-2007 |
| | | | DE | 60122168 T2 | 23-08-2007 |
| | | | DE | 60126354 T2 | 18-10-2007 |
| | | | DE | 60126413 T2 | 18-10-2007 |
| | | | EP | 1309464 A2 | 14-05-2003 |
| | | | EP | 1309879 A2 | 14-05-2003 |
| | | | EP | 1309882 A2 | 14-05-2003 |
| | | | EP | 1309883 A2 | 14-05-2003 |
| | | | EP | 1310012 A2 | 14-05-2003 |
| | | | EP | 1310018 A1 | 14-05-2003 |
| | | | EP | 1422533 A1 | 26-05-2004 |
| | | | EP | 1870728 A2 | 26-12-2007 |
| | | | EP | 1870729 A2 | 26-12-2007 |
| | | | EP | 1870730 A2 | 26-12-2007 |
| | | | EP | 1873551 A1 | 02-01-2008 |
| | | | EP | 1879045 A2 | 16-01-2008 |
| | | | EP | 1879046 A2 | 16-01-2008 |
| | | | EP | 1879047 A2 | 16-01-2008 |
| | | | EP | 1912080 A2 | 16-04-2008 |
| | | | EP | 1939648 A2 | 02-07-2008 |
| | | | EP | 2474436 A2 | 11-07-2012 |
| | | | JP | 4928052 B2 | 09-05-2012 |
| | | | JP | 5063851 B2 | 31-10-2012 |
| | | | JP | 2004505844 A | 26-02-2004 |
| | | | JP | 2004506906 A | 04-03-2004 |
| | | | JP | 2004506908 A | 04-03-2004 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 44 6501

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2016

| Patent document cited in search report | Publication date | Patent family member(s) | Publication date |
|---|---|---|---|
| | | JP 2004506909 A | 04-03-2004 |
| | | JP 2004506912 A | 04-03-2004 |
| | | JP 2004507138 A | 04-03-2004 |
| | | JP 2011050114 A | 10-03-2011 |
| | | JP 2011197011 A | 06-10-2011 |
| | | KR 20030022407 A | 15-03-2003 |
| | | KR 20030022409 A | 15-03-2003 |
| | | KR 20030034143 A | 01-05-2003 |
| | | KR 20030036704 A | 09-05-2003 |
| | | KR 20030065464 A | 06-08-2003 |
| | | KR 20030065465 A | 06-08-2003 |
| | | KR 20070097128 A | 02-10-2007 |
| | | US 6657581 B1 | 02-12-2003 |
| | | US 2002044082 A1 | 18-04-2002 |
| | | US 2002067287 A1 | 06-06-2002 |
| | | US 2002067305 A1 | 06-06-2002 |
| | | US 2002072843 A1 | 13-06-2002 |
| | | US 2002075138 A1 | 20-06-2002 |
| | | US 2002075178 A1 | 20-06-2002 |
| | | US 2002163478 A1 | 07-11-2002 |
| | | US 2002190891 A1 | 19-12-2002 |
| | | US 2003001772 A1 | 02-01-2003 |
| | | US 2003210172 A1 | 13-11-2003 |
| | | US 2003210182 A1 | 13-11-2003 |
| | | US 2004155812 A1 | 12-08-2004 |
| | | US 2004246170 A1 | 09-12-2004 |
| | | US 2004257266 A1 | 23-12-2004 |
| | | US 2005179582 A1 | 18-08-2005 |
| | | WO 0214098 A2 | 21-02-2002 |
| | | WO 0214891 A2 | 21-02-2002 |
| | | WO 0214898 A2 | 21-02-2002 |
| | | WO 0214900 A2 | 21-02-2002 |
| | | WO 0215323 A2 | 21-02-2002 |
| | | WO 0215334 A1 | 21-02-2002 |